# EUROPÄISCHE PATENTANMELDUNG

(11) **EP 1 707 068 A2**
(43) Veröffentlichungstag der Anmeldung: **04.10.2006**
(21) Anmeldenummer: 06002681.2
(22) Anmeldetag: 09.02.2006
(51) Int. Cl.: A45C 13/02, A45C 5/00

(54) **Laptop-Gehäuse für insbesondere die Mitnahme in einem Fahrzeug**

(30) Priorität: 01.04.2005 DE 102005015120
(71) Anmelder: SORTIMO INTERNATIONAL AUSRÜSTUNGSSYSTEME FÜR SERVICEFAHRZEUGE GmbH, D-86441 Zusmarshausen (DE)
(72) Erfinder: Stegherr, Franz, 86391 Stadtbergen (DE)
(74) Vertreter: Zipse + Habersack

(57) **Zusammenfassung**

Die Erfindung betrifft ein tragbares Gehäuse (10) zur Aufnahme eines mobilen Computers, insbesondere eines Laptops oder Notebooks, mit einem zum Verschließen des Gehäuses vorgesehenen Gehäusedeckel (12), wobei eine in dem Gehäuse (10) aufnehmbare Trägerplatte (14) zur Plazierung eines mobilen Computers darauf vorgesehen ist und die Trägerplatte (14) mit Führungs-Mitteln an dem Gehäuse (12) anlenkbar ist, sodass eine geführte Bewegung der Trägerplatte relativ zum Gehäuse (10) möglich ist.

## Beschreibung

Die Erfindung betrifft ein Computer-Gehäuse entsprechend einem tragbaren Koffer zur Aufnahme eines mobilen Computers, wie insbesondere einem Laptop oder Notebook, welches Gehäuse für insbesondere eine Mitnahme in einem Kraftfahrzeug geeignet ist.

Im Stand der Technik sind sowohl mobile Computer, z.B. sog. Laptops oder Notebooks, wie auch Computertaschen oder Koffer zur Mitnahme solcher Rechner bekannt. Bei einer Mitnahme von mobilen Rechnern in Kraftfahrzeugen ist ein Arbeiten am und eine Bedienung des Computers im Fahrzeug selbst oftmals erforderlich oder zweckdienlich, wobei insbesondere an Arbeitspersonal im Außendienst oder an Servicetechniker zu denken ist, die mit einem Servicefahrzeug unterwegs ist.

Betreffend den Einsatz eines Mobilrechners in einem Fahrzeug ist im Stand der Technik beispielsweise gemäß der DE 202 02 769 U1 eine einstellbare Halteeinrichtung für einen Bordcomputer vorgeschlagen worden, die im Sitzkonsolenbereich des Beifahrers befestigt werden kann, so dass die Bedienperson in einer Sitzposition auf ihrem Fahrersitz den Computer in eine für sie geeignete Stellung bringen kann, von welcher aus der Computer bequem bedienbar ist. Bei dieser Halteeinrichtung wird eine zur Platzierung des Computers vorgesehene Tischplatte über ein Gestängesystem im Bodenbereich mittels einem zwischen dem Kardantunnel und dem Türschweller einspannbaren Fuß befestigt. Die Montage eines solchen Haltesystems für Bordcomputer ist daher sehr aufwendig. Ferner ist ein Haltesystem dieser Art äußerst störend, wenn es nicht gebraucht wird, wobei eine Demontage dann gleichsam arbeitsintensiv ist. Die störende Mitnahme eines solchen Haltesystems ist insbesondere dann von Bedeutung, wenn der Beifahrersitz durch eine mitfahrende Person besetzt ist und die Haltevorrichtung nur bedingt aus dem Bewegungsumfeld des Beifahrers verschwenkt werden kann.

Aufgabe der Erfindung ist es, eine geeignete Mitnahme- und Aufbewahrungsvorrichtung für mobile Computer vorzusehen, die sich gleichermaßen als Haltevorrichtung für den Computer eignet und zwar insbesondere zur Verwendung in Kraftfahrzeugen.

Die Erfindung wird gelöst durch Vorsehen eines tragbaren Gehäuses, an dem ein Gehäusedeckel angelenkt ist, wobei eine in dem Gehäuse aufnehmbare Trägerplatte vorgesehen ist, die mit Mitteln an dem Gehäuse anlenkbar ist, derart, dass eine relative Bewegung der Trägerplatte relativ zu dem Gehäuse möglich ist.

Um an einem auf der Trägerplatte platzierten Computer arbeiten zu können, kann die Trägerplatte an dem Gehäuse in einer sich abstützenden Weise festlegbar sein, derart, dass die Trägerplatte zum Bedienen des Rechners geeignet positionierbar ist. Zu diesem Zweck einer Abstützfunktion der Trägerplatte gegenüber dem Gehäuse ist letzteres vorzugsweise aus einem Hart-Kunststoff gefertigt. Vorteilhafterweise ist eine mit Führungsmitteln geführte Bewegung der Trägerplatte relativ zu dem Gehäuse möglich. Während gemäß einer einfachsten Ausführungsform eine lose Trägerplatte auf einem bewegbar gehaltenen Lagerarm festlegbar ist, ist gemäß einer vorteilhaften Ausführungsform vorgesehen, dass die Trägerplatte permanent mit dem Gehäuse verbunden ist, und eine Herausnahme des Computers aus dem Gehäuse durch Anheben der Trägerplatte mit nachfolgender horizontaler Verschiebung der Trägerplatte möglich ist, welche Bewegungen durch die Führungsmittel der Trägerplatte geführt sind.

Aufgrund der Verschiebbarkeit der Trägerplatte in der Horizontalebene kann, wenn das tragbare Gehäuse auf einem Beifahrersitz platziert ist, eine Bedienperson in einer Sitzposition auf dem Fahrersitz des Kraftfahrzeuges den Computer in eine geeignete Position zu sich heranziehen.

Gemäß einer vorteilhaften Ausführungsform ist vorgesehen, dass der Gehäusedeckel klappbar an dem Gehäuse gehalten ist, und die Trägerplatte an der Innenseite des Gehäusedeckels in einem Abstand zur Schwenkachse des Deckels angelenkt ist, so dass beim Aufklappen des Deckels zum Öffnen des Gehäuses die Trägerplatte zumindest teilweise aus dem Gehäuse angehoben wird. Durch den damit geschaffenen Abstand zwischen Trägerplatte und vorderer Gehäusewand, ist es für die Bedienperson erleichtert, die Trägerplatte zu untergreifen, um den Computer auf der Trägerplatte in eine geeignete Position aus dem Gehäuse bewegen zu können. Im Ergebnis ist bei einer solchen beabstandeten Anlenkung der Trägerplatte am Gehäusedeckel ein einzelner Handgriff zum Herausnehmen eines auf der Trägerplatte platzierten Computers aus dem Gehäuse ausreichend.

Umgekehrt wird beim Schließen des Gehäuses durch Herunterklappen des Gehäusedeckels die Trägerplatte in das Gehäuse versenkt. Die Trägerplatte ist derart an dem Gehäusedeckel angelenkt, dass bei herabgeklapptem Gehäusedeckel ein ausreichender Abstand zwischen der Trägerplatte und der Innenseite des Gehäusedeckels verbleibt, um bei herunter geklapptem Gehäusedeckel einen mobilen Computer zwischen Trägerplatte und Gehäusedeckel aufnehmen zu können. Gleichzeitig zur erfüllten Funktion einer geeigneten Positionierung des Rechners für dessen Bedienung bietet die erfindungsgemäße Vorrichtung damit auch eine Lösung zum geeigneten Aufbewahren des Computers auf der in dem Gehäuse aufgenommenen Trägerplatte.

Gemäß einer weiteren vorteilhaften Ausführungsform weist die Trägerplatte ein Schienenelement auf, mit dem sie an dem Gehäusedeckel in einem Schienenaufnahmeelement verschiebbar gehalten ist. Eine Verschiebung der Trägerplatte erfolgt in horizontaler Ebene.

Es wird ferner als vorteilhaft erachtet, dass die Trägerplatte eine obere Grundplatte aufweist, die gegenüber der Trägerplatte dreh- und/oder verschwenkbar gehalten ist. In Verbindung mit der oben dargestellten Schienenführung der Trägerplatte an der Innenseite des Gehäusedeckels ist mit Hilfe der so angelenkten Grundplatte mindestens eine weitere Bewegungsfreiheit eröffnet, durch die ein auf der Grundplatte platzierter Computer in eine geeignete Position zur Bedienperson bewegt werden kann. Die Drehung der Grundplatte erfolgt dabei vorteilhaft über eine vertikale Drehachse, wobei eine weitere Schwenkbewegung vorteilhaft in der Horizontalebene möglich ist.

Für den Einsatzzweck des erfindungsgemäßen Gehäuses in einem Fahrzeug weist eine vorteilhafte Ausführungsform Befestigungsmittel auf, mit denen das Gehäuse auf einem Fahrzeugsitz festlegbar ist. Zu diesem Zweck kann das Gehäuse Riemen aufweisen, die einen Teil des Fahrzeugsitzes, bzw. dessen Rückenlehne umgreifen. Gleichermaßen ist ein Gestänge denkbar, das einerseits an einer Vorrichtung im Fahrzeug und anderseits an dem Gehäuse lösbar befestigbar ist. Eine Möglichkeit zum Festlegen des Gehäuses auf dem Fahrzeugsitz wird ferner darin gesehen, dass das Gehäuse ein Gurtband mit einem Gurtschloss entsprechend dem Schloss des Personen-Sicherheitsgurtes aufweist, so dass das Gehäuse durch Einrasten des Gurtschlosses in dem am Fahrzeugsitz herkömmlicher Weise befestigten komplementären Schuh des Schlosses einrastbar ist.

Bei einer weiteren vorteilhaften Ausführungsform ist vorgesehen, dass die Stellfläche des Gehäuses morphologisch, d. h. in ihrer Außenkontur, komplementär zur Sitzfläche eines Fahrzeugsitzes ausgeformt ist. Durch diese Maßnahme ist eine waagrechte Stellposition des Gehäuses auf einem ergonomisch geformten Fahrzeugsitz gewährleistet. Es ist diesbezüglich möglich, auch ein von dem Gehäuse getrenntes Formelement an der Stellfläche des Gehäuses vorzusehen. Dieses Formelement kann beispielsweise lösbar an der Stellfläche des Gehäuses angebracht sein. Bei einer Positionierung des Gehäuses auf einem Fahrzeugsitz ist die Ausformung der Stellfläche derart, dass das Gehäuse entgegengesetzt, d. h. mit dem Gehäusedeckel weg von der Rückenlehne des Fahrzeugsitzes aufklappbar ist.

Ferner weist das Gehäuse vorteilhafterweise ein Schloss zum Verschließen auf, womit das Gehäuse auch im Fahrzeug belassen bleiben kann und ein sich im Gehäuse befindlicher Computer sicher aufbewahrt ist.

Um auch das Gehäuse selbst diebstahlsicher in einem Kraftfahrzeug aufbewahren zu können, weist das Gehäuse gemäß einer vorteilhaften Ausführungsform Sicherungsmittel auf, mit denen es am Fahrzeug im Innenraum festlegbar ist. Hierzu können Sicherungsösen an dem Gehäuse vorgesehen sein, in denen ein Sicherungsschloss mit daran angeordnetem Stahlseil eingerastet werden kann, dass an der Karoserie des Fahrzeugs befestigbar ist. Derartige Sicherungsösen sind bereits bei mobilen Computern bekannt, die damit beispielsweise in Verkaufsräumen gesichert sein können.

Ferner ist gemäß einer vorteilhaften Ausführungsform des Gehäuses vorgesehen, dass dessen Größe so bemessen ist, dass weitere Peripheriegeräte des mobilen Rechners mit in dem Gehäuse aufgenommen werden können. Hierzu zählen beispielsweise ein externer Akku oder ein Drucker etc..

Zum einfachen Anschließen des mobilen Rechners an Computeranschlussleitungen wird es als vorteilhaft gesehen, dass auf der Trägerplatte, bzw. der Grundplatte eine Docking-Steckleiste vorgesehen ist. Der Computer wird beim Platzieren auf der Trägerplatte, bzw. der Grundplatte mit seinen rückseitigen Anschlüssen an der Docking-Steckleiste eingesteckt. Von der Docking-Steckleiste sind dann Kabel in den Innenraum des Gehäuses geführt, beispielsweise an weitere Peripheriegeräte des Computers. Gleichermaßen kann eine Verkabelung von der Docking-Steckleiste nach außen durch einen Kabelkanal aus dem Gehäuse geführt sein.

Schließlich wird es als vorteilhaft erachtet, Mittel zum stoßsicheren Lagern des Computers oder der weiteren Peripheriegeräte in dem Gehäuse und/oder an dem Gehäusedeckel vorzusehen. Diese Mittel können Schaumstoffpolster oder andere einen Stoß aufnehmende Halterungen, Einfassungen oder dergl. sein.

Die Erfindung wird nachfolgend mit Bezug auf die beigefügten Zeichnungen näher erläutert. In diesen zeigen:
- - Fig. 1: eine Ausführungsform des erfindungsgemäßen Gehäuses in einer perspektivischen Ansicht mit aufgeklapptem Gehäusedeckel;
- - Fig. 2: das erfindungsgemäße Gehäuse aus Figur 1 mit veränderter Position der Trägerplatte;
- - Fig. 3: eine weitere Ausführungsform des erfindungsgemäßen Gehäuses mit einer auf der Trägerplatte angeordneten Bodenplatte, und
- - Fig. 4: die Ausführungsform des erfindungsgemäßen Gehäuses nach Figur 3 mit weiteren Details.

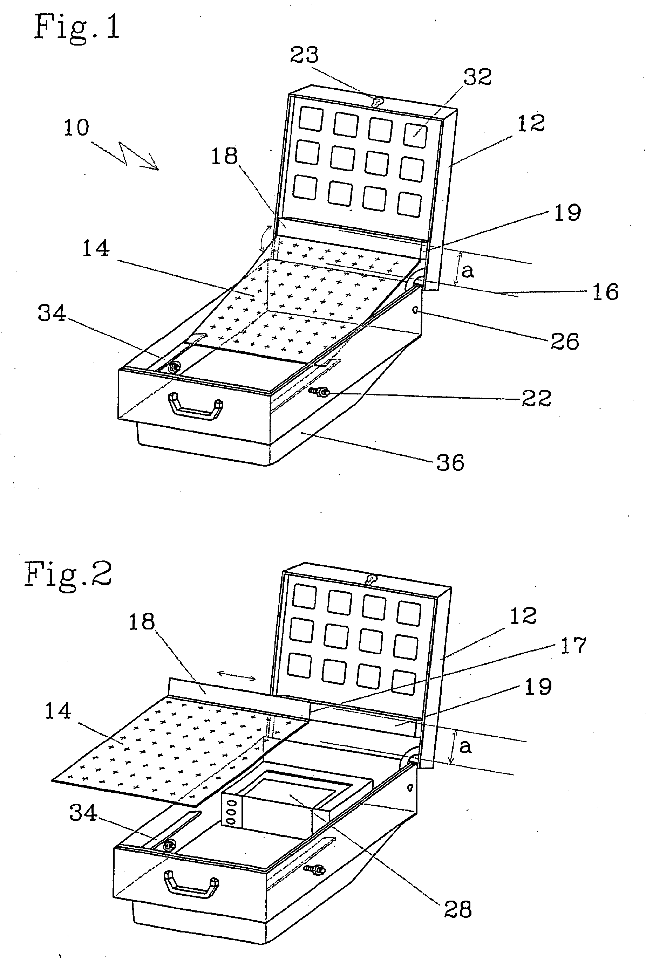

Figur 1 zeigt das erfindungsgemäße Gehäuse 10 in einer perspektivischen Ansicht. Das Gehäuse ist durch Hochklappen des Gehäusedeckels 12 geöffnet dargestellt. An der Innenseite des Gehäusedeckels 12 ist im Abstand a zur Schwenkachse des Deckels eine Trägerplatte 14 angelenkt, die bei einer Bewegung des Gehäusedeckels 12 mitbewegt wird. Auf der Trägerplatte 14 ist ein Laptop (nicht gezeigt) abzustellen. Bei geschlossenem Gehäuse befindet sich die Trägerplatte 14 bei der in Fig. 1 gezeigten Positionierung des Gehäuses 10 in einer waagrechten Position, indem die Trägerplatte 14 einerseits an der Vorderseite des Gehäuses auf Auflage-Leisten 34 ruht und an ihrem gegenüberliegenden Ende durch die Anlenkung an der Innenseite des Gehäusedeckels 12 gehalten ist. Beim Öffnen des Gehäusedeckels 12 wird die Trägerplatte 14 aufgrund des Abstands a zwischen der Anlenkung der Trägerplatte an dem Gehäusedeckel und der Schwenkachse des Deckels 16 aus dem Innenraum des Gehäuses heraus gehoben, wobei das gegenüberliegende Ende der Trägerplatte 14 auf den Auflage-Leisten 34 entlang gleitet.

Die Aufklappposition des Gehäusedeckels 12 ist durch Begrenzungsmittel (nicht gezeigt) begrenzt, die im einfachsten Fall durch einen Anschlag der Endstellung des Gehäusedeckels 12 realisiert ist. In dieser Endstellung lässt sich der Gehäusedeckel in einem Winkel zwischen 90° und 120° von der Horizontalebene aufklappen. Gemäß einer Weiterbildung ist die Klappposition des Gehäusedeckels durch Rastestifte arretierbar, sodass der Gehäusedeckel in einer gewünschten aufgeklappten Winkel-Stellung gehalten werden kann.

Das Gehäuse weist an seiner in Fig. 1 gezeigten Unterseite eine Stellfläche 36 auf, die komplementär zur Form der Sitzfläche eines Fahrzeugsitzes ausgeformt ist. Durch die Ausformung der Stellfläche 36 kann das Gehäuse 10 mit der in Fig. 1 gezeigten Position mit der Oberseite des Gehäuses in eine waagrechte Stellung auf einem Fahrzeugsitz abgesetzt werden. Die Ausformung ist dabei in einer vorteilhaften Ausführungsform so vorgesehen, dass bei einer Platzierung auf dem Fahrzeugsitz der Gehäusedeckel 12 weg von der Fahrzeuglehne aufklappbar ist.

Die in Fig. 1 gezeigte Gehäuseausführung weist einen Kabelschacht 19 auf, über den die Trägerplatte 14 an der Innenseite des Gehäusedeckels 12 angelenkt ist. In dem Kabelschacht 19 können Kabel aufgenommen sein, die an weitere Peripheriegeräte des mobilen Computers führen. Antselle eines Kabelschachtes kann auch nur eine Teleskopschiene vorgesehen sein. Das Gehäuse weist ferner Sicherungsmittel 26 in Form von Sicherungsösen auf, in die jeweils ein Schloss von beispielsweise einem Stahlseil zum Festlegen des Gehäuses 10 im Innenraum eines Fahrzeugs eingeklinkt werden kann.

Schließlich weist das Gehäuse 10 Befestigungsmittel 22 auf, mit denen das Gehäuse nach einer Platzierung auf einem Fahrzeugsitz dort rutschfest fixiert werden kann. An den Befestigungsmitteln 22 können Gurtbänder angeordnet sein, die beispielsweise die Sitzfläche oder Rückenlehne des Fahrzeugsitzes umgreifen und so das Gehäuse auf dem Fahrzeugsitz festlegen. Ein an der Vorderseite des Gehäuses angeordneter Tragegriff ermöglicht eine einfache Mitnahme des Gehäuses. Die Tragefunktion können natürlich auch die an den Befestigungsmitteln 22 befestigten Gurtbänder übernehmen, die nach dem Lösen am Fahrzeugsitz als Trageriemen dienen können.

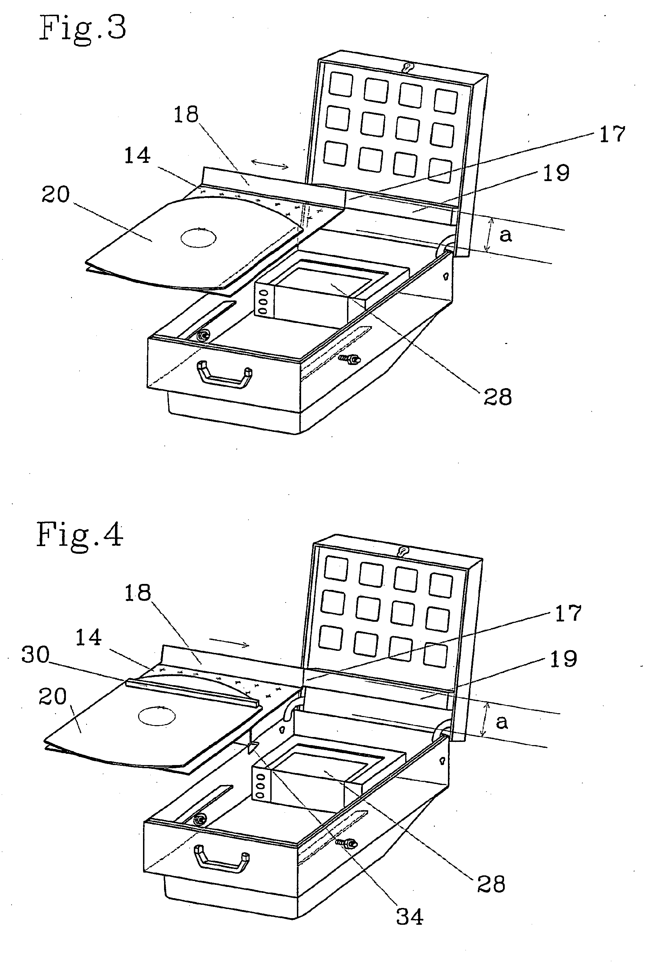

Wie in Verbindung mit Figur 2 zu ersehen ist, ist die Trägerplatte 14 mit Hilfe eines Schienenelements 18 an der Innenseite des Gehäusedeckels 12 in einem Schienenaufnahmeelement 17 angelenkt, so dass die Trägerplatte 14 nach einem Anheben aus dem Innenraum des Gehäuses entlang des Schienenaufnahmeelements 17 am Kabelschacht 19 verschoben werden kann. Die Trägerplatte 14 wird über eine weitere Schienenführung (siehe insbesondere Fig. 4) auf der Seitenwand des Gehäuses 10 beim Verschieben geführt, sodass eine horizontale Verschiebung der Trägerplatte gewährleistet ist.

Wie in Figur 2 ferner gezeigt, ist in dem Gehäuse 10 ein Peripheriegerät 28 in Form eines Computerdruckers aufgenommen. Das Computeranschlusskabel (nicht gezeigt) ist vom Innenraum des Gehäuses 10 in den Kabelschacht 19 bis zur Anschlussstelle an den Computer geführt. Damit die Verschiebebewegung der Trägerplatte 14 nicht gestört ist, muss für eine ausreichende Länge des Druckerkabels Sorge getragen werden, bzw. ist ein federbeaufschlagtes Aufrollelement zum Aufrollen des Druckerkabels mit einem Kabelauszug bei wegbewegender Trägerplatte vorgesehen.

Fig. 3 zeigt eine weitere Ausführungsvariante, bei der eine Bodenplatte 20 auf der Trägerplatte 14 angeordnet ist. Die Bodenplatte 20 ist mittels eines Schwenkarmes (nicht gezeigt) und einem Drehlager (nicht gezeigt) auf der Trägerplatte 14 angeordnet, derart, dass die Bodenplatte 20 relativ zur Trägerplatte 14 sowohl in Horizontalrichtung wegschwenkbar als auch um eine Vertikalachse drehbar ist. Nach einem Aufklappen des Gehäuses bei einer Platzierung auf dem Beifahrer-Fahrzeugsitz kann eine Bedienperson den Computer bequem in eine Arbeitsposition bringen, so dass die Bedienperson sitzend auf dem Fahrersitz den Computer bedienen kann. Die Relativbewegung der Bodenplatte 20 gegenüber der Trägerplatte 14 kann mit Rastereinrichtungen gebremst sein, die nur eine schrittweise Bewegung der Bodenplatte 20 ermöglichen.

Wie in Fig. 4 gezeigt, ist bei diesem Ausführungsbeispiel eine Docking-Steckleiste 30 auf der Bodenplatte 20 angeordnet, die einen einfachen Anschluss eines mobilen Computers an weitere Peripheriegeräte ermöglicht. Von der Docking-Steckleiste 30 sind Kabel über den Kabelschacht 19 in den Innenraum des Gehäuses 10 an ein Peripheriegerät 28 geführt. Zum Verschieben der Trägerplatte 14 ist an der jeweiligen Seitenwand des Gehäuses je ein Schienenelement 34 vorgesehen, dass mit einer an der Trägerplatte 14 vorgesehenen Schiene so zusammenwirkt, dass die Trägerplatte 14 mittels der Schiene 34 sowie der an der Innenseite des Gehäusedeckels 12 angeordneten Schiene 18 waagrecht verschiebbar ist.

## Patentansprüche

1. Tragbares Gehäuse (10) zur Aufnahme eines mobilen Computers, insbesondere eines Laptops oder Notebooks, mit einem zum Verschließen des Gehäuses vorgesehenen Gehäusedeckel (12), wobei in dem Gehäuse (10) eine darin aufnehmbare Trägerplatte (14) zur Platzierung eines mobilen Computers darauf vorgesehen ist, die mit Führungs-Mitteln an dem Gehäuse (12) anlenkbar ist, um eine geführte Bewegung der Trägerplatte relativ zum Gehäuse (10) zu ermöglichen, **dadurch gekennzeichnet, dass** die Führungsmittel vor der Relativbewegung zwischen der Trägerplatte (14) und dem Gehäuse (12) ein Anheben der Trägerplatte aus dem nach oben geöffneten Innenraum des Gehäuses realisieren.

2. Gehäuse (10) nach Anspruch 1,
**dadurch gekennzeichnet, dass** der Gehäusedeckel klappbar an dem Gehäuse gehalten ist, und die Trägerplatte (14) an der Innenseite des Gehäusedeckels in einem Abstand (a) zur Schwenkachse (16) des Gehäusedeckels angelenkt ist, sodass beim Aufklappen des Deckels zum Öffnen des Gehäuses (10) die Trägerplatte (14) zumindest teilweise aus dem Gehäuse (10) angehoben wird.

3. Gehäuse nach Anspruch 1 oder 2,
**dadurch gekennzeichnet, dass** die Trägerplatte (14) ein Schienenelement (18) aufweist, mit dem die Trägerplatte an dem Gehäusedeckel (12) über ein mit dem Gehäusedeckel verbundenes Schienenaufnahmelement verschiebbar gehalten ist.

4. Gehäuse (10) nach einem der vorangehenden Ansprüche,
**dadurch gekennzeichnet, dass** die Trägerplatte (14) eine obere Grundplatte (20) aufweist, die gegenüber der Trägerplatte (14) dreh und/oder schwenkbar gelagert ist.

5. Gehäuse (10) nach einem der vorangehenden Ansprüche,
**dadurch gekennzeichnet, dass** das Gehäuse (10) Befestigungsmittel (22) zum Festlegen des Gehäuses auf einem Fahrzeugsitz aufweist.

6. Gehäuse (10) nach einem der vorangehenden Ansprüche,
**dadurch gekennzeichnet, dass** die Stellfläche (36) des Gehäuses morphologisch komplementär zur Sitzfläche eines Fahrzeugsitzes geformt ist.

7. Gehäuse (10) nach einem der vorangehenden Ansprüche,
**dadurch gekennzeichnet, dass** das Gehäuse ein Schloß (23) zum Verschließen des Gehäuses aufweist.

8. Gehäuse (10) nach einem der vorangehenden Ansprüche,
**dadurch gekennzeichnet, dass** das Gehäuse (10) Sicherungsmittel (26) aufweist, mit denen das Gehäuse diebstahlsicher in einem Fahrzeuginnenraum gesichert werden kann.

9. Gehäuse (10) nach einem der vorangehenden Ansprüche,
**dadurch gekennzeichnet, dass** das Gehäuse (10) in seiner Größe derart dimensioniert ist, dass Peripheriegeräte des Computers, wie beispielsweise ein Akku oder ein Drucker, in dem Gehäuse (10) aufgenommen werden kann.

10. Gehäuse (14) nach einem der vorangehenden Ansprüche insbesondere nach Anspruch 9,
**dadurch gekennzeichnet, dass** auf der Trägerplatte (14), bzw. der Grundplatte (20) eine Docking-Steckleiste (30) zum Anschließen eines Computers an Peripheriegeräte (28) vorgesehen ist.

11. Gehäuse (10) nach einem der vorangehenden Ansprüche,
**dadurch gekennzeichnet, dass** Mittel (32) zum stoßsicheren Lagern des Computers und/oder weiterer Peripheriegeräte (28) in dem Gehäuse (10) und an dem Gehäusedeckel (12) vorgesehen sind.
